# EUROPÄISCHE PATENTSCHRIFT

(11) **EP 1 995 163 B1**
(45) Veröffentlichungstag und Bekanntmachung des Hinweises auf die Patenterteilung: **25.08.2010**
(21) Anmeldenummer: 08009518.5
(22) Anmeldetag: 23.05.2008
(51) Int. Cl.: B62J 35/00, B62K 19/30, F02M 35/02

(54) **Motorrad mit einem Fahrersattel und einem Kraftstofftank**
Motorbike with a driver saddle and a fuel tank
Moto comprenant une selle de conducteur et un réservoir de carburant

(30) Priorität: 23.05.2007 DE 102007023962
(43) Veröffentlichungstag der Anmeldung: 26.11.2008
(73) Patentinhaber: KTM Sportmotorcycle AG, 5230 Mattighofen (AT)
(72) Erfinder: Trunkenpolz, Johann, 5241 Maria Schmolln (AT); Plazotta, Bernhard, 5110 Oberndorf (AT); Gröbner, Helmut, 83367 Petting (DE)
(74) Vertreter: Söllner, Udo

(56) Entgegenhaltungen:
- EP-A- 0 602 591
- EP-A- 1 743 832
- EP-A- 1 859 984
- DE-A1- 3 524 881
- FR-A- 2 586 393
- GB-A- 2 169 253
- JP-A- 4 078 781
- JP-A- 62 046 795
- US-A- 4 577 719

## Beschreibung

Die vorliegende Erfindung betrifft ein Motorrad mit einem Fahrersattel und einem Kraftstofftank sowie einer mit einem Filterelement versehenen Luftansaugvorrichtung zur Filterung von Ansaugluft für eine Brennkraftmaschine des Motorrads, wobei die Luftansaugvorrichtung eine Filterelementaufnahme aufweist. Darüber hinaus betrifft die vorliegende Erfindung auch einen Kraftstofftank für ein Motorrad mit einer integrierten Luftansaugvorrichtung.

Ein mit einer Brennkraftmaschine ausgestattetes Motorrad weist üblicherweise eine Luftansaugvorrichtung auf, in der ein Filterelement angeordnet ist, mit dem aus der Ansaugluft für die Brennkraftmaschine Verunreinigungen herausgefiltert werden können. Zudem besitzt die Luftansaugvorrichtung die Funktion der Bedämpfung des Ansauggeräusches der Brennkraftmaschine.

Zu diesem Zweck weisen bekannte Luftansaugvorrichtungen ein Gehäuse auf, in dem mindestens eine mit der Umgebungsluft in Verbindung stehende Öffnung ausgebildet ist, durch die Luft in das Gehäuse der Luftansaugvorrichtung eintreten kann und auch eine entsprechend der Zylinderzahl der Brennkraftmaschine vorgesehene Zahl von Öffnungen für den Austritt von gereinigter Ansaugluft in Richtung zur Brennkraftmaschine hin. Das in der Luftansaugvorrichtung vorgesehene Filterelement unterteilt den im Gehäuse ausgebildeten Raum in einen Rohluftbereich mit ungefilterter Ansaugluft und einen Reinluftbereich mit bereits gefilterter Ansaugluft.

Das Gehäuse der bekannten Luftansaugvorrichtung ist üblicherweise mehrteilig ausgebildet und weist ein Gehäusesegment auf, in dem das Filterelement angeordnet werden kann und einen Deckel zum Verschließen des Gehäuseelements mit einer beispielsweise im Deckel ausgebildeten Öffnung zum Eintritt von ungefilterter Ansaugluft in das Gehäuse der Luftansaugvorrichtung. Der Reinluftbereich ist mit einer fluidischen Verbindungsleitung in der Form eines Ansaugstutzens oder dergleichen mit einer Gemischaufbereitungsanlage in der Form eines Drosselklappenkörpers oder Vergasers der Brennkraftmaschine verbunden. Bei einer solchen Konfiguration setzt sich also das Gehäuse der Luftansaugvorrichtung aus vielen verschiedenen Einzelbauteilen zusammen und die so gebildete Luftansaugvorrichtung muss dann am Rahmen des Motorrads festgelegt werden und benötigt daher einerseits Bauraum und andererseits einen Rahmenausleger oder dergleichen, um daran lösbar festgelegt werden zu können.

Neben der Luftansaugvorrichtung besitzt das Motorrad auch einen Kraftstofftank, der zur Anordnung am Rahmen des Motorrads vorgesehen ist und als eigenständiges Bauteil ausgeführt ist und über am Rahmen vorgesehene Anbindungspunkte mit dem Rahmen verbunden wird.

Anhand der JP 06312680 A ist eine Ansaugvorrichtung für beispielsweise ein Motorrad bekannt geworden, bei der an einem vor einem Fahrersattel angeordneten Kraftstofftank im hinteren Bereich, also zwischen dem Fahrersattel und dem Kraftstofftank eine Luftkammer vorgesehen ist, die über eine zwischen dem Kraftstofftank und dem Fahrersattel angeordnete Abdeckung verschlossen ist, so dass also an dem Kraftstofftank eine Luftansaugvorrichtung mit einem eigenständigen Gehäuse angeordnet ist und dieses zwischen dem Kraftstofftank und dem Fahrersattel angeordnet ist.

Anhand der JP 61155024 A ist eine Luftansaugvorrichtung für ein Motorrad bekannt geworden, bei der innerhalb des Kraftstofftanks eine Luftansaugvorrichtung mit einem eigenständigen Gehäuse angeordnet ist und von dort die gereinigte Ansaugluft in Richtung zur Brennkraftmaschine des Motorrads transportiert werden kann, so dass die zur Aufnahme des Gehäuses im Inneren des Kraftstofftanks ausgebildete Ausnehmung Kraftstofftankvolumen in Anspruch nimmt und somit die Tankkapazität verringert.

Anhand der JP 60261732 A ist wiederum eine der vorstehend erwähnten Luftansaugvorrichtungen ähnliche Konfiguration bekannt geworden, bei der eine Luftansaugvorrichtung im Bereich zwischen dem Kraftstofftank und dem Fahrersattel vorgesehen ist derart, dass sich die Luftansaugvorrichtung vor dem Fahrersattel befindet und an einer Oberseite des Kraftstofftanks angeordnet.

Anhand der JP 11099977 A ist ein Motorrad bekannt geworden mit einer ein eigenständiges Gehäuse aufweisenden Luftansaugvorrichtung, die innerhalb des Kraftstofftanks in einer Ausnehmung angeordnet ist und somit wiederum das Aufnahmevolumen des Kraftstofftanks deutlich beschneidet.

Anhand der EP 0602591 A1 ist ein Motorrad nach dem Oberbegriff des Anspruchs 1 bzw ein Kraftstofftank nach dem Oberbegriff des Anspruchs 15 bekannt , bei dem die Luftansaugvorrichtung ein eigenständiges Gehäuse besitzt, in dem ein Luftfilterelement angeordnet ist.

Anhand der US-PS 4,648,474 ist ein Luftfiltersystem für Motorräder bekannt geworden, welches von einem in einem Hauptrahmenbauteil ausgebildeten Hohlraum Gebrauch macht und eine in einem Kraftstofftank des Motorrads ausgebildete Ausnehmung Zugang zu der Luftfilteranordnung gestattet.

Allen genannten Luftansaugvorrichtungen ist gemeinsam, dass unabhängig davon, ob die Luftansaugvorrichtung am Rahmen des Motorrads befestigt wird oder an der Peripherie des Kraftstofftanks oder innerhalb einer Ausnehmung des Kraftstofftanks, der Kraftstofftank und die Luftansaugvorrichtung getrennt ausgebildete Einheiten sind und daher entweder nicht Platz sparend am Motorrad angebracht werden können, da sie jeweils eigene Befestigungspunkte benötigen oder aufgrund der im Kraftstofftank ausgebildeten Ausnehmungen für die eigenständig ausgebildete Luftansaugvorrichtung das Tankvolumen deutlich verringern. Darüber hinaus sorgt die getrennte Ausbildung der Luftansaugvorrichtung und des Kraftstofftanks dafür, dass der von beiden getrennten Einheiten benötigte Bauraum den für andere Baugruppen am Motorrad erforderlichen Anbauraum beschränkt und bei der Montage des Motorrads getrennte Baugruppen montiert werden müssen und daher auch bei der Materialdisposition bei der Fertigung des Motorrads entsprechend vorgehalten werden müssen.

Der vorliegenden Erfindung liegt nun die Aufgabe zu Grunde, ein Motorrad mit einem Kraftstofftank zu schaffen, der die genannten Nachteile beseitigt. Auch soll ein entsprechender Kraftstofftank für das Motorrad geschaffen werden.

Die Erfindung weist nun zur Lösung dieser Aufgabe die in den Ansprüchen 1 und/oder 15 angegebenen Merkmale auf. Vorteilhafte Ausgestaltungen hiervon sind in den weiteren Ansprüchen beschrieben.

Die Erfindung schafft nun ein Motorrad mit einem Fahrersattel und einem Kraftstofftank sowie einer mit einem Filterelement versehenen Luftansaugvorrichtung zur Filterung von Ansaugluft für eine Brennkraftmaschine des Motorrads, wobei die Luftansaugvorrichtung eine Filterelementaufnahme aufweist und die Filterelementaufnahme von einem durch den Kraftstofftank gebildeten Bereich ausgebildet ist. Der Filteraufnahmebereich ist dabei der Bereich, an dem sich das Filterelement angeordnet befindet. Durch die erfindungsgemäße Ausgestaltung derart, dass die Filterelementaufnahme von einem durch den Kraftstofftank gebildeten Bereich ausgebildet ist, wird erreicht, dass die Luftansaugvorrichtung kein eigenständiges Gehäuse mehr benötigt und somit die Notwendigkeit wegfällt, eine mit einem eigenständigen Gehäuse ausgebildete Luftansaugvorrichtung am Motorrad anzubringen, wodurch der von dem Gehäuse der Luftansaugvorrichtung benötigte Bauraum eingespart werden kann und daher beispielsweise das Kraftstoffvolumen des Kraftstofftanks vergrößert werden kann. Darüber hinaus wird dadurch auch erreicht, dass durch die Anordnung des die Filterelementaufnahme aufweisenden Kraftstofftanks am Motorradrahmen bei der Fertigung des Motorrads die Montagezeit verringert werden kann, die üblicherweise für die Anbringung der eigenständig ausgebildeten Luftansaugvorrichtung am Motorrad benötigt wird. Auch kann dadurch die Materialdisposition für die Fertigung des Motorrads vereinfacht werden, da die eigenständige Baugruppe Luftansaugvorrichtung wegfallen kann.

Zusätzlich schafft die Erfindung auch noch den Vorteil der freien konstruktiven Gestaltungsmöglichkeit des den Motorradrahmen umgebenden Raumes, da der für die Anordnung der Luftansaugvorrichtung benötigte Bauraum nunmehr für andere Komponenten zur Verfügung steht. Auch wird dadurch eine raumsparende Gestaltung von Kraftstofftank und Luftansaugvorrichtung geschaffen, so dass bei mit bekannten Konfigurationen vergleichbarem Kraftstoffvolumen der Kraftstofftank kleiner und schmäler ausfallen kann, da bei einer Anordnung der Luftansaugvorrichtung innerhalb des Kraftstofftanks, wie dies bei bekannten Konfigurationen der Fall ist, der für die Anordnung des Gehäuses der Luftansaugvorrichtung benötigte Bauraum bei der erfindungsgemäßen Konfiguration wegfällt und somit der Kraftstofftank enger und schmäler an den Hauptrahmen des Motorrads angeschmiegt werden kann und somit der Fahrer des erfindungsgemäßen Motorrads nicht mehr von einem bauchigen und ausladenden Kraftstofftank in seiner Bewegungsfreiheit auf dem Motorrad eingeschränkt wird.

Auch wird dadurch erreicht, dass eigenständige Anbindungspunkte für die Luftansaugvorrichtung am Motorradrahmen wegfallen und somit beispielsweise auch für die Anbringung der Luftansaugvorrichtung bisher benötigte Hilfsrahmen oder Ausleger am Motorradrahmen wegfallen können, so dass auch die Rahmenkonstruktion insgesamt vereinfacht werden kann. Schließlich führt die Integration der Filterelementaufnahme in den Kraftstofftank auch zu einer Verringerung der für die Fertigung des Motorrads benötigten Bauteilzahl, da die Funktion der Luftansaugvorrichtung und die Funktion des Kraftstofftanks zu einer Multifunktionsbaugruppe verbunden wird und darüber hinaus wird durch die erfindungsgemäße Konfiguration auch erreicht, dass verglichen mit der bekannten Konfiguration aus Kraftstofftank und eigenständiger Luftansaugvorrichtung durch die Funktionsintegration und den Wegfall eigenständiger Gehäusebauteile der Luftansaugvorrichtung das Gewicht der aus Kraftstofftank und Filterelementaufnahme gebildeten Einheit verglichen mit eigenständigen Baugruppen verringert werden kann.

Die Erfindung sieht es also vor, dass die Filterelementaufnahme von einem durch den Kraftstofftank gebildeten Bereich ausgebildet ist, so dass beispielsweise hiervon auch umfasst ist, dass eine Filterelementaufnahme in den Kraftstofftank beispielsweise in eine Ausnehmung eingesetzt werden kann und trotzdem verglichen mit bekannten Konfigurationen Bauraum für die Anordnung eines Gehäuses der Luftansaugvorrichtung an dem so ausgebildeten Bereich eingespart wird, da nach der vorliegenden Erfindung die Luftansaugvorrichtung kein eigenständiges Gehäuse mehr benötigt.

Nach einer Weiterbildung der Erfindung ist es aber auch vorgesehen, dass der Filterelementaufnahmebereich mit dem Kraftstofftank einstückig ausgebildet ist. So kann beispielsweise bei der Fertigung des Kraftstofftanks aus beispielsweise einem Kunststoffwerkstoff in einem Rotationsgießverfahren oder Druckgießverfahren oder Spritzgießverfahren der Filterelementaufnahmebereich mit dem Kraftstofftank einstückig ausgebildet werden, so dass durch die selbsttragende Konfiguration des Kraftstofftanks eine Hilfsrahmenanordnung oder eigenständige Anbindungspunkte für die Luftansaugvorrichtung am Motorradrahmen nicht mehr benötigt werden.

Nach einer Weiterbildung der Erfindung ist es dabei vorgesehen, dass die Luftansaugvorrichtung ein integraler Bestandteil des Kraftstofftanks ist und mindestens ein Rohluftbereich und/oder Reinluftbereich der Luftansaugvorrichtung von durch den Kraftstofftank bildenden Wandbereichen eingeschlossen ist. Dadurch wird erreicht, dass Wandbereiche, die den Kraftstofftank bilden, gleichzeitig auch einen Rohluftbereich und/oder einen Reinluftbereich der Luftansaugvorrichtung bilden und somit eine Funktionsintegration erreicht wird und eigenständige Gehäusebauteile zur Bildung der Luftansaugvorrichtung in Wegfall gelangen.

Bei den vorstehend beschriebenen bekannten Konfigurationen ist die Luftansaugvorrichtung zwischen dem Kraftstofftank und dem Fahrersattel angeordnet, so dass die Bewegungsfreiheit des Fahrers auf dem Fahrersattel in Richtung zur Lenkstange eingeschränkt ist.

Die Erfindung löst auch dieses Problem, da nach einer Weiterbildung der Erfindung vorgesehen ist, dass die Luftansaugvorrichtung unterhalb des Fahrersattels angeordnet ist und zumindest Teilbereiche eines Rohluftbereichs der Luftansaugvorrichtung von dem Fahrersattel eingeschlossen sind. Damit wird erreicht, dass die Bewegungsfreiheit des Fahrers verglichen zu den vorstehend beschriebenen bekannten Konfigurationen verbessert wird und darüber hinaus der Fahrersattel auch die Funktion der Führung von Ansaugluft in den Rohluftbereich oder Teilluftbereichen des Rohluftbereichs übernehmen kann. Zu diesem Zweck ist es nach der Erfindung vorgesehen, dass ein am Fahrersattel angeordneter Boden eine im Kraftstofftank ausgebildete Ausnehmung übergreift, in der das Filterelement angeordnet ist.

Der Fahrersattel kann also einen Boden oder einen Unterbau aufweisen, der eine im Kraftstofftank ausgebildete Ausnehmung übergreift, in der das Filterelement angeordnet ist. Damit übernimmt der Unterbau des Fahrersattels die Funktion eines Deckels der Luftansaugvorrichtung, ohne dass hierfür ein eigenständiges Bauteil erforderlich ist. Der Unterbau des Fahrersattels kann gleichzeitig als rohluftführendes Bauteil ausgebildet sein.

Die Erfindung sieht nach einer Weiterbildung auch vor, dass der Kraftstofftank eine lang gestreckte Konfiguration aufweist und eine zur Aufnahme des Filterelements ausgebildete Ausnehmung besitzt, die zumindest seitlich von zur Aufnahme von Kraftstoff ausgebildeten Bereichen des Kraftstofftanks umfasst ist. Durch diese Konfiguration wird erreicht, dass das Ansauggeräusch der Brennkraftmaschine durch die die Ausnehmung, in der das Filterelement angeordnet ist, seitlich umgebenden Bereiche des Kraftstofftanks gedämpft wird.

Bei dem nach der Erfindung vorgesehenen Motorrad kann es sich beispielsweise um ein auch im unbefestigten Gelände bewegtes Motorrad handeln, bei dem die Beladung der ungefilterten Ansaugluft im Rohluftbereich der Ansaugluftvorrichtung mit Staub, Sand, Wasser oder anderen Verunreinigungen ein zusätzliches Problem darstellt. Um nun die Beladung der Ansaugluft im Rohluftbereich mit den genannten Verunreinigungen zu verringern, ist es nach einer Weiterbildung der Erfindung vorgesehen, dass der Fahrersattel den Kraftstofftank entlang seiner Längsrichtung zumindest teilweise überspannt und zwischen einem Boden des Fahrersattels und einer Oberseite des Kraftstofftanks ein Kanal zur Führung von Ansaugluft ausgebildet ist. Damit kann über die zwischen dem Unterbau des Fahrersattels und der Oberseite des Kraftstofftanks ausgebildete kanalförmige Ausnehmung dafür Sorge getragen werden, dass der Rohluftbereich an einer höchst möglichen Position innerhalb der Außenabmessungen des Motorrads zu liegen kommt und somit die Beladung der ungefilterten Ansaugluft im Rohluftbereich mit Verunreinigungen verringert wird.

Vorstehend wurde ausgeführt, dass zur Bildung des Kraftstofftanks herangezogene Wände auch zur Bildung von zumindest Teilen des Reinluftbereichs der Luftansaugvorrichtung herangezogen werden können. Eine fertigungstechnisch weiter vereinfachte Konfiguration wird dadurch erreicht, dass in eine im Kraftstofftank ausgebildete Ausnehmung ein vorzugsweise elastisch ausgebildeter Körper einbringbar ist, der stromabwärts des Filterelements einen Reinluftbereich ausbildet und gleichzeitig zur Führung von Ansaugluft in Richtung zur Brennkraftmaschine ausgebildet ist.

Durch diese Konfiguration kann ein vorgefertigter Körper aus beispielsweise einem gummielastischen Kunststoff oder einem anderen spritzfähigen Elastomer vorgeformt werden und in die im Kraftstofftank ausgebildete Ausnehmung dichtend eingesetzt werden und zu diesem Zweck beispielsweise Randbereiche der Ausnehmung dichtend übergreifen und so stromabwärts des Filterelements einen Reinluftbereich ausbilden und gleichzeitig dabei die gereinigte Ansaugluft in Richtung zur Brennkraftmaschine führen. An dem vorgebildeten Formkörper kann daher ein gereinigte Ansaugluft aus dem Reinluftbereich in Richtung zu einem Drosselklappenkörper oder einem Vergaser führender Ansatz ausgebildet sein.

Bei dem Filterelement kann es sich beispielsweise um einen Nassluftfilter in der Form eines Schaumstoffelements handeln, das in lösbarer Weise an einem Filterträger festgelegt wird. Die Erfindung sieht nun auch vor, dass der Filterträger im Bereich der Filterelementaufnahme festgelegt wird, an dem sich wiederum das Filterelement angeordnet befindet.

Neben dem vorstehend bereits erwähnten Ansaugluftbereich unterhalb des Fahrersattels ist es nach einer Weiterbildung auch vorgesehen, dass der Kraftstofftank im Bereich einer das Filterelement aufnehmenden Ausnehmung mit mindestens einer weiteren Ausnehmung versehen ist, über die Ansaugluft in Richtung zu einem Rohluftbereich der Luftansaugvorrichtung geführt werden kann. Damit kann auch Ansaugluft aus der den Kraftstofftank anströmenden Luft bei einer Fahrt des Motorrads über die weitere Ausnehmung in den Bereich des Rohluftbereichs der Luftansaugvorrichtung geführt werden.

Nach einer Ausführungsform gemäß der vorliegenden Erfindung ist es vorgesehen, dass sich der Kraftstofftank in Längsrichtung des Motorrads von einem Bereich nahe eines Lenkkopflagerrohrs bis zu einem Bereich oberhalb eines Drehpunktes einer Hinterradschwinge des Motorrads erstreckt. Dadurch wird erreicht, dass ein großes Kraftstoffvolumen zur Verfügung steht und das in einer Ausnehmung des Kraftstofftanks angeordnete Filterelement von einem entsprechend großen Kraftstoffvolumen beziehungsweise einem zur Aufnahme von Kraftstoff zur Verfügung stehenden Bereich des Kraftstofftanks umschlossen und somit geräuschbedämpft wird.

Wird eine weitere Vergrößerung des Kraftstoffvolumens gewünscht, so ist es nach einer Weiterbildung der Erfindung auch vorgesehen, dass sich der Kraftstofftank in Längsrichtung des Motorrads von einem Bereich nahe eines Lenkkopflagerrohrs bis zu einem Bereich oberhalb eines Hinterrads des Motorrads erstreckt. Damit wird eine Konfiguration geschaffen, die in der Terminologie eines vor der vertikalen Schwerpunktachse des Motorrads angeordnetem Fronttank und hinter der vertikalen Schwerpunktachse angeordnetem Hecktank sowohl einen Fronttank als auch einen Hecktank besitzt und zudem in diesen so ausgebildeten Kraftstofftank die Funktion der Luftansaugvorrichtung integriert wird. Der so gebildete Kraftstofftank besitzt daher die Funktion eines Fronttanks als auch die Funktion eines Hecktanks und zusätzlich die Funktion einer Luftansaugvorrichtung und kann einstückig als Kunststoffformteil beispielsweise durch einen Rotationsgießvorgang oder durch einen Druckgießvorgang oder durch einen Spritzgießvorgang hergestellt werden. Zudem weist diese Konfiguration auch den Vorteil auf, dass sie selbsttragend ausgebildet ist und keinen Hilfsrahmen mehr benötigt, da sie am Rahmen des Motorrads festgelegt werden kann und gleichzeitig als Abstützung für den Fahrersattel und für elektronische und/oder elektrische Bauteile oder Bauteilgruppen eingesetzt werden kann und selbst ein Kabelbaum für die elektrische Ausstattung des Motorrads an diesem so ausgebildeten Kraftstofftank vormontiert festgelegt werden kann. Auch weist diese Konfiguration den weiteren Vorteil auf, dass nach dem Abnehmen des Kraftstofftanks alle darunter angeordneten Funktionsbaugruppen des Motorrads, wie beispielsweise Federbein oder Drosselklappenkörper oder Vergaser oder auch die Brennkraftmaschine zu Montage oder Wartungsarbeiten ungehindert zugänglich sind, und somit Wartungs- oder Servicezeiten am so ausgebildeten Motorrad deutlich verringert werden können.

Darüber hinaus kann durch diese Konfiguration des Kraftstofftanks als Fronttank und gleichzeitig Hecktank eine entsprechend gewünschte Radlastverteilung am Motorrad erreicht werden und damit eine ausgewogene Gewichtsverteilung in Verbindung mit einem neutralen Fahrverhalten des so ausgebildeten Motorrads.

Nach einer Weiterbildung der Erfindung ist es vorgesehen, dass im Bereich einer tiefsten Stelle des Kraftstofftanks eine beispielsweise elektrisch betriebene Kraftstoffpumpe angeordnet ist, so dass die durch die erfindungsgemäße Konfiguration des Kraftstofftanks auch erreichte Erweiterung des Tankvolumens auch zu größeren Reichweiten führt, die beispielsweise bei zu Wettbewerbszwecken eingesetzten Motorrädern von erheblicher Bedeutung sind.

Die Erfindung sieht nach einer Weiterbildung auch vor, dass im Bereich eines die Längsrichtung des Motorrads einem Lenkkopflagerrohr gegenüberliegenden Endbereichs des Kraftstofftanks ein Entlüftungsventil vorgesehen ist, so dass der Kraftstofftank auch beispielsweise mittels einer Schnelltankanlage zeitsparend befüllt werden kann. Nach einer Modifikation des so gebildeten Tanks ist es auch möglich, dass vom einströmenden Kraftstoff verdrängte Luft im Kraftstofftank über das Entlüftungsventil beispielsweise über eine am Tank vorgesehene Fluidleitung in den Bereich eines am Kraftstofftank ausgebildeten Einfüllstutzens rückgeführt wird, so dass das Austreten von Kraftstoffdämpfen beim Betanken verhindert werden kann, indem diese Dämpfe über die Schnelltankanlage aufgenommen werden.

Eine weitere Funktionsintegration in den Kraftstofftank des erfindungsgemäßen Motorrads kann dadurch erreicht werden, dass ein einem Hinterrad des Motorrads zugewandter unterer Bereich des Kraftstofftanks als Kotflügel für das Hinterrad gekrümmt ausgebildet ist, so dass die Montage eines zusätzlichen Kotflügels am erfindungsgemäßen Motorrad entfallen kann.

Nach einer weiteren Modifikation gemäß der vorliegenden Erfindung ist es auch vorgesehen, dass ein in Längsrichtung des Motorrads vorderer unterer Bereich des Kraftstofftanks mit einer kanalförmigen Ausnehmung zur Führung von Ansaugluft in Richtung eines Rohluftbereichs der Luftansaugvorrichtung ausgebildet ist. Damit wird ein zur Geräuschdämpfung der Ansaugluft langer Weg der Ansaugluft durch die kanalförmige Ausnehmung des Kraftstofftanks erreicht, was zur weiteren Verringerung des Ansaugluftgeräusches der Brennkraftmaschine des Motorrads beiträgt. Neben der Bedämpfung des Ansaugluftgeräusches im Rohluftbereich ist es nach einer Fortführung der Erfindung auch vorgesehen, dass an einem Reinluftbereich der Luftansaugvorrichtung ein den Reinluftbereich vergrößerndes Gehäuse lösbar festgelegt wird. Durch diese Anordnung wird durch den vergrößerten Reinluftbereich eine weitere Bedämpfung des Ansaugluftgeräusches der Brennkraftmaschine erreicht, so dass das so ausgebildete Motorrad insgesamt leiser wird, was beispielsweise bei zu Trialveranstaltungen eingesetzten Motorrädern von Bedeutung ist.

Das Motorrad kann nach der vorliegenden Erfindung einen selbsttragend ausgebildeten Kraftstofftank aufweisen, der mittels eines Festlagers und mindestens eines Loslagers an einem Rahmen des Motorrads festgelegt werden kann. Hier kann der Kraftstofftank beispielsweise im Bereich eines Lenkkopflagerrohrs mittels eines Schwenklagers am Rahmen des Motorrads festgelegt werden, so dass der Kraftstofftank am Schwenklager in Richtung einer Hochachse des Motorrads verschwenkt werden kann und auf diese Weise nach dem Entfernen des Fahrersattels und dem Verschwenken des Kraftstofftanks Bauteile im Motorrad wie beispielsweise ein Federdämpferelement oder Federbein frei zugänglich ist für beispielsweise Einstell- oder Montagearbeiten.

Aufgrund der Ausbildung des Kraftstofftanks sowohl als Fronttank als auch als Hecktank, kann das so ausgebildete Motorrad ein großes Kraftstoffvolumen aufnehmen. Um nun ein die Radlastverteilung des so ausgebildeten Motorrads in nicht gewünschter Weise veränderndes Hin- und Herschwappen des Kraftstoffs im Kraftstofftank zu vermeiden, ist es nach einer Weiterbildung der Erfindung vorgesehen, dass der Kraftstofftank in seinem eine Ausnehmung für die Anordnung des Filterelements umgebenden Bereich mit mindestens einer Verengung versehen ist derart, dass die Strömungsgeschwindigkeit des Kraftstofftanks zwischen dem in Längsrichtung des Motorrads vorderen und hinteren Bereich des Kraftstofftanks im Bereich der Verengung verringert ist. Diese Engstelle wirkt als Drossel und sorgt auf diese Weise dafür, dass in Richtung der Fahrzeuglängsachse oder Fahrzeughochachse auftretende Impulse aufgrund von beispielsweise Bodenunebenheiten oder Beschleunigungen beziehungsweise Bremsvorgängen des Motorrads nicht zu unerwünschten Veränderungen der Radlastverteilung und des Fahrverhaltens führen.

Der Kraftstofftank des erfindungsgemäßen Motorrads kann aus einem Kunststoffwerkstoff gefertigt sein, insbesondere Polyethylen und/oder Polyamid. Die Verwendung von Polyethylen kann beispielsweise bei einer Serienfertigung des erfindungsgemäßen Motorrads stattfinden, da sich Polyethylen beim Kontakt mit Kraftstoff zwar stärker ausdehnt als vergleichsweise Polyamid, aber zu einer kostengünstigen Fertigung beiträgt. Die Verwendung von Polyamid kann beispielsweise bei zu Wettbewerbszwecken eingesetzten Motorrädern stattfinden, da sich Polyamid weniger ausdehnt als Polyethylen beim Kontakt mit Kraftstoff und darüber hinaus die Kraftstoffdiffusion verringert. Nach einer Weiterbildung der Erfindung ist es auch vorgesehen, dass der Kraftstofftank zweischalig ausgebildet ist mit einer innen liegenden Schale aus Polyamid und einer außen liegenden Schale aus Polyethylen, so dass die Längenausdehnung des Kraftstofftanks beim Kontakt mit Kraftstoff durch die innen liegende Polyamidschale verringert wird und durch die außen liegende Schale aus Polyethylen erreicht wird, dass eine Beschädigung der Polyamidschale durch aufgewirbelte Steine oder dergleichen ausgeschlossen ist.

Das erfindungsgemäße Motorrad gestattet durch die einstückige Ausbildung des Kraftstofftanks gleichzeitig als Fronttank und als Hecktank das zur Verfügung stehende Tankvolumen deutlich zu vergrößern, da eine der Rahmenstruktur des Motorrads angepasste Ausbildung des Kraftstofftanks möglich ist. Wird ein solches Motorrad nun beispielsweise zu Wettbewerbszwecken eingesetzt bei Geländesportfahrten, so ist dafür Sorge zu tragen, dass große Federwege zur Verfügung stehen, was beispielsweise durch eine Umlenkvorrichtung am Federdämpferelement erreicht werden kann. Zu diesem Zweck ist es nach einer Weiterbildung der Erfindung vorgesehen, dass der Kraftstofftank an seiner Unterseite mit einer Ausnehmung zur Schaffung eines Anordnungsraumes für die Federdämpfereinheit des Motorrads versehen ist, in der auch die angesprochene Umlenkung aufgenommen werden kann.

Die Erfindung schafft nun auch einen Kraftstofftank für ein Motorrad mit einer integrierten Luftansaugvorrichtung und einer Filterelementaufnahme für ein Filterelement zur Filterung von Ansaugluft für eine Brennkraftmaschine des Motorrads, wobei die Filterelementaufnahme an einem durch den Kraftstofftank gebildeten Bereich ausgebildet ist und das Filterelement an der Filterelementaufnahme festgelegt werden kann derart, dass das Filterelement einen Rohluftbereich und einen Reinluftbereich trennt. Der Kraftstofftank kann also beispielsweise einstückig mit der Filterelementaufnahme ausgebildet sein, an der das Filterelement festgelegt werden kann, beispielsweise über einen Federbügel oder dergleichen. Der Kraftstofftank bildet dabei zumindest Teilbereiche eines Reinluftbereichs und/oder eines Rohluftbereichs aus, wobei der Reinluftbereich von mit dem Kraftstofftank einstückig ausgebildeten Seitenwänden gebildet ist und einen Auslass zur Führung von Ansaugluft in Richtung zur Brennkraftmaschine aufweist.

Schließlich ist es auch noch vorgesehen, dass die am Kraftstofftank ausgebildete Filterelementaufnahme eine Öffnung zum Durchtritt von Ansaugluft umgibt und das Filterelement an der Öffnung direkt oder mittels eines Filterelementträgers dichtend in Anlage gebracht werden kann.

Die Erfindung wird nunmehr im Folgenden anhand der Zeichnung näher erläutert. Diese zeigt in:
Fig. 1 eine teilweise geschnittene Darstellung einer Seitenansicht eines Motorrads gemäß einer Ausführungsform nach der vorliegenden Erfindung;
Fig. 2 eine vergrößerte Darstellung des Kraftstofftanks des Motorrads nach Fig. 1 mit einem daran angeordneten Fahrersattel im Schnitt; und
Fig. 3 eine Darstellung ähnlich Fig. 1, die ein Motorrad gemäß einer weiteren Ausführungsform mit einem modifizierten Kraftstofftank zeigt.

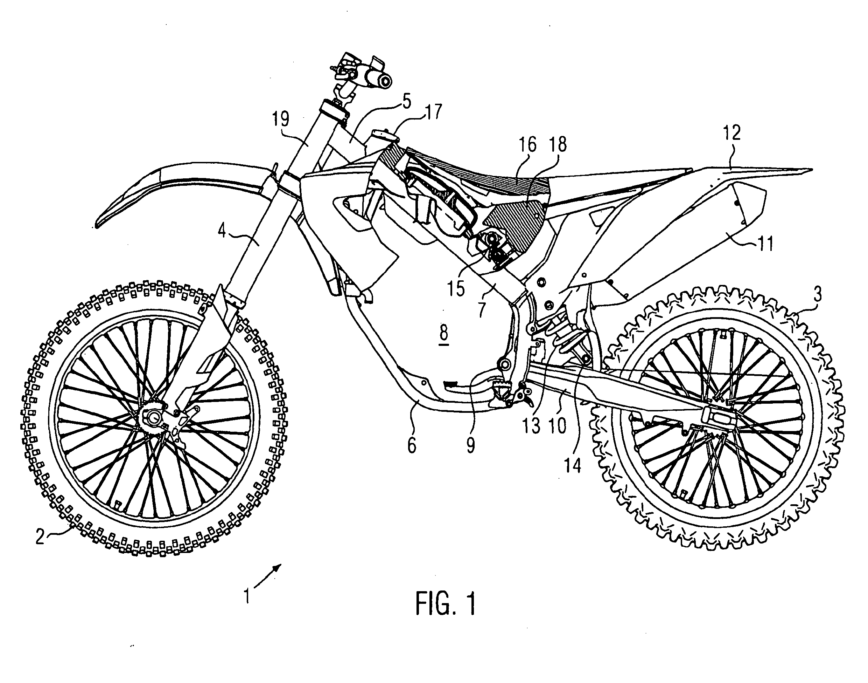

Fig. 1 der Zeichnung zeigt in einer schematischen Darstellung ein Motorrad 1 gemäß der vorliegenden Erfindung, bei dem zur Vereinfachung der Darstellung teilweise Baugruppen, wie beispielsweise eine Brennkraftmaschine mit einem damit verbundenen Getriebe und eine die Antriebsleistung von der Brennkraftmaschine zum Hinterrad übertragende Antriebskette weggelassen worden sind. Zudem sind beispielsweise auch Bremsscheiben am Vorderrad 2 und Hinterrad 3 des Motorrads 1 zum Zwecke der Vereinfachung der Darstellung weggelassen worden.

Das Motorrad 1 weist in der dargestellten Ausführungsform eine Vorderradgabel 4 mit Federdämpfereinheiten und einen Rahmen 5 auf, der als Schleifenrahmen mit Unterzügen 6 ausgebildet ist. Innerhalb eines von einem Oberrohr 7 und den Unterzügen 6 gebildeten Aufnahmeraumes 8 kann die nicht dargestellte Brennkraftmaschine in der Form beispielsweise eines Viertaktmotors aufgenommen werden.

Der Rahmen 5 weist einen unteren Dreiecksbereich 9 auf, an dem eine Hinterradschwinge 10 zur Führung des Hinterrads 3 gelagert ist.

Ein Schalldämpfer 11 der Abgasanlage ist in der gewählten Darstellung unterhalb eines das Hinterrad 3 abdeckenden Kotflügels 12 angeordnet dargestellt, befindet sich in einer Ansicht von oben aber auf der rechten Seite des Motorrads 1 verlaufend angeordnet. Ein Federdämpferelement 13 weist einen unteren Anbindungspunkt 14 zur Anlenkung an der Hinterradschwinge 10 und einen oberen Anbindungspunkt 15 zur Anbindung an einem Ausleger des Motorradrahmens 5 auf. Das Federdämpferelement 13 kann auch am unteren Anbindungspunkt 14 oder am oberen Anbindungspunkt 15 eine nicht näher dargestellte Umlenkung besitzen, mit der eine Vergrößerung des zur Verfügung gestellten Federwegs möglich ist.

Ein Fahrersattel 16, der als Sitzbank ausgebildet ist, erstreckt sich von einem, einem Einfüllstützen 17 eines Kraftstofftanks 18 nahe liegenden Bereich in Fahrzeuglängsrichtung des Motorrads 1 betrachtet von einem einem Lenkkopflagerrohr 19 benachbarten Bereich von vorne in Richtung nach hinten bis zu einem dem hinteren Kotflügel 12 benachbarten hinteren Bereich.

Der Kraftstofftank 18 erstreckt sich bei der in Fig. 1 der Zeichnung dargestellten Ausführungsform von einem dem Lenkkopflagerrohr 19 benachbarten Bereich in Fahrzeuglängsrichtung des Motorrads 1 betrachtet in Richtung nach hinten bis zu einem Bereich oberhalb des Dreiecksbereichs 9, an dem die Hinterradschwinge 10 gelagert ist.

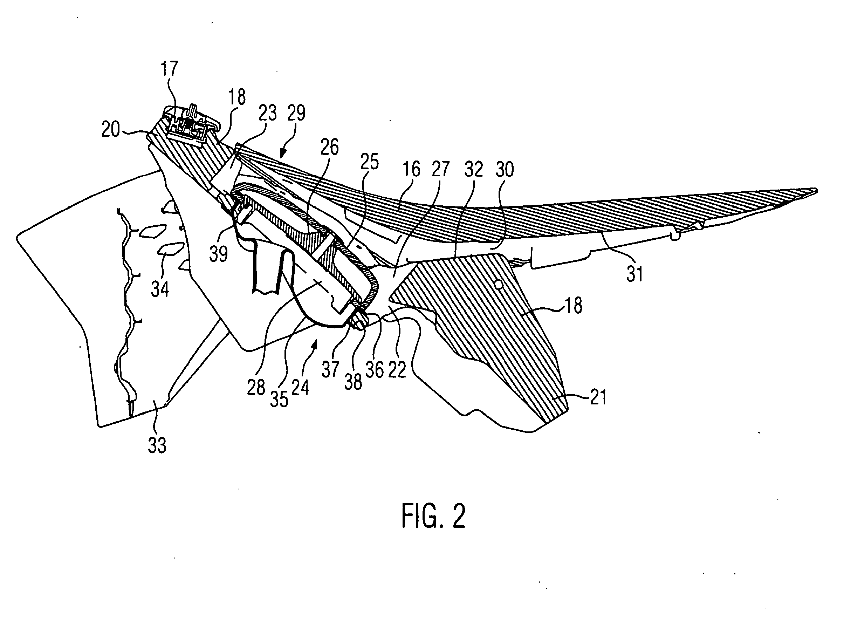

Nachfolgend wird nunmehr auf Fig. 2 der Zeichnung Bezug genommen, die in einer vergrößerten Darstellung den Kraftstofftank 18 des Motorrads 1 zeigt.

Der Kraftstofftank 18 weist eine insgesamt lang gestreckte Konfiguration auf mit einem Einfüllstutzen 17, durch den Kraftstoff in den Kraftstofftank 18 eingeführt werden kann. Der Kraftstofftank 18 kann dabei diesen Kraftstoff in dem vorderen oder oberen Aufnahmebereich 20, dem hinteren oder unteren Aufnahmebereich 21 und einem den oberen Aufnahmebereich 20 mit dem unteren Aufnahmebereich 21 verbindenden Verbindungsbereich 22 aufnehmen. Dieser Verbindungsbereich 22 umgibt eine im Kraftstofftank 18 ausgebildete Ausnehmung 23, in der ein Filterelementaufnahmebereich 24 ausgebildet ist, der zur Aufnahme eines Filterelements 25 ausgebildet ist, welches in der dargestellten Ausführungsform von einem an einem Filterelementträger 26 angeordneten Schaumstoffelement gebildet ist.

Bei der in Fig. 1 beziehungsweise Fig. 2 dargestellten Ausführungsform befindet sich das Filterelement 25 an dem Filterelementträger 26 angeordnet, der zusammen mit dem Filterelement 25 an dem Filterelementaufnahmebereich 24 lösbar festgelegt wird und zwar mittels beispielsweise eines nicht näher dargestellten Federbügels.

Das Filterelement 25 trennt dabei einen in der Ausnehmung 23 gebildeten Rohluftbereich 27 von einem Reinluftbereich 28 der Luftansaugvorrichtung 29.

Die für die innermotorische Verbrennung durch die Brennkraftmaschine benötigte Ansaugluft gelangt dabei in den Rohluftbereich 27 durch einen Kanal 30, der zwischen einem Boden oder einer Unterseite 31 des Fahrersattels 16 und einer Oberseite 32 des Kraftstofftanks gebildet ist.

Fig. 1 der Zeichnung zeigt dabei, dass der Kanal 30 durch den Kotflügel 12 gegen vom Hinterrad 3 aufgewirbelte Steine oder Verunreinigungen geschützt wird. Ein Teilvolumenstrom der Ansaugluft kann bei der dargestellten Ausführungsform auch über den Kraftstofftank 18 bei der Fahrt des Motorrads 1 anströmenden Fahrtwind in den in der Ausnehmung 23 gebildeten Rohluftbereich 27 gelangen. Zu diesem Zweck ist zur Luftführung im vorderen Bereich des Kraftstofftanks 18 beidseits der Längsmittelachse des Motorrads 1 jeweils ein Verkleidungsbauteil 33 mit Öffnungen 34 vorgesehen, durch die Ansaugluft von außen in einen Bereich zwischen dem Verkleidungsbauteil 33 und dem Kraftstofftank 18 strömen kann, an dem beidseits der Ausnehmung 23 eine weitere, nicht dargestellte Ausnehmung vorgesehen ist, über die anströmende Ansaugluft in die Ausnehmung 23 und damit in den Rohluftbereich 27 gelangen kann. Nach dem Durchtritt der ungefilterten Ansaugluft durch das Filterelement 25 gelangt die Ansaugluft in den Reinluftbereich 28, der bei der dargestellten Ausführungsform auch teilweise innerhalb der Ausnehmung 23 angeordnet ist und in Richtung zum Aufnahmeraum 8 für die Brennkraftmaschine hin durch einen elastischen Körper 35 erweitert wird, der in die Ausnehmung 23 des Kraftstofftanks 18 dichtend eingebracht werden kann und zwar derart, dass ein jeweils oberer und unterer Dichtrand 36, 37 des elastischen Körpers 35 eine in der Ausnehmung 23 gebildete Öffnung zum Durchtritt von gefilterter Ansaugluft in Richtung zur Brennkraftmaschine hin dichtend umschließt.

Der elastische Körper 35 weist zudem den Vorteil auf, dass durch seine Anordnung innerhalb der Öffnung 39 so, dass über den Rand 38 der Öffnung 39 in den Reinluftbereich keine Verunreinigungen gelangen können, der Reinluftbereich damit auch schon fertig gestellt ist, ohne dass weitere Gehäusebauteile oder dergleichen der Luftansaugvorrichtung 29 festgelegt werden müssten.

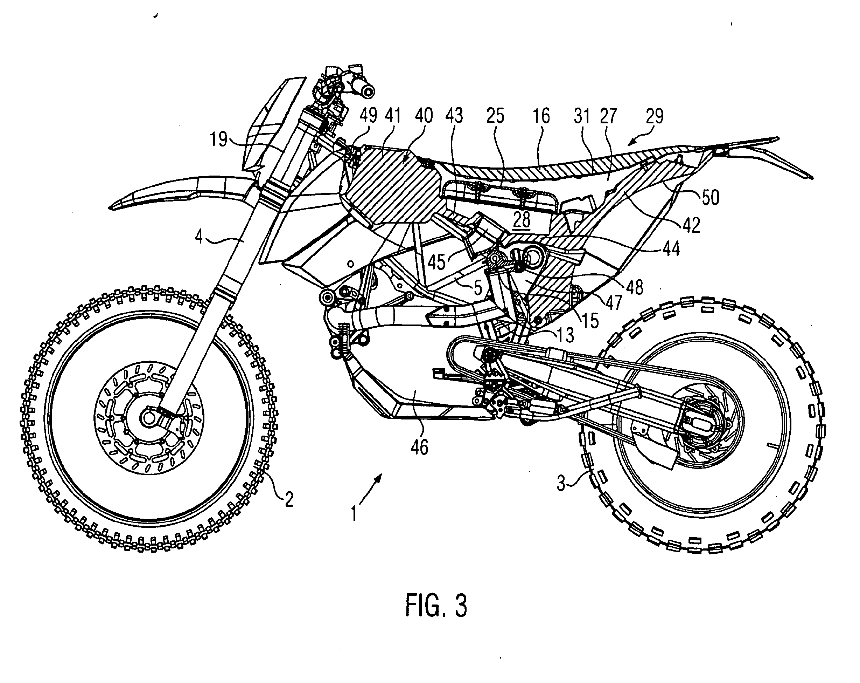

Fig. 3 der Zeichnung nun zeigt in einer teilweise geschnittenen Darstellung ein Motorrad 1 gemäß einer weiteren Ausführungsform nach der vorliegenden Erfindung mit einem im Vergleich zum Kraftstofftank 18 gemäß Fig. 1 und 2 der Zeichnung modifizierten Kraftstofftank 40.

Der Kraftstofftank 40 gemäß der weiteren Ausführungsform weist ein größeres Kraftstoffvolumen auf als der in Fig. 1 und 2 der Zeichnung dargestellte Kraftstofftank 18, wobei dies hauptsächlich dadurch erreicht wird, dass der Kraftstofftank 40 einstückig sowohl als Fronttank, als auch als Hecktank ausgebildet ist.

Bei dem in Fig. 3 dargestellten Motorrad 1 verläuft die vertikale Schwerpunktsachse des Motorrads 1 etwa durch den oberen Anbindungspunkt 15 des Federdämpferelements 13. Der Kraftstofftank 40 ist dabei in Vorwärtsfahrtrichtung des Motorrads betrachtet vor der durch den oberen Anbindungspunkt 15 verlaufenden vertikalen Schwerpunktsachse als Fronttank 41 ausgebildet und in Fahrtrichtung des Motorrads 1 hinterhalb der vertikalen Schwerpunktsachse als Hecktank 42. Der Fronttankbereich 41 und der Hecktankbereich 42 sind durch einen Verbindungsabschnitt 43 einstückig miteinander verbunden, der einerseits zur Leitung von Kraftstoff aus dem Fronttankbereich 41 in den Hecktankbereich 42 ausgebildet ist und andererseits gleichzeitig auch mit seinen Seitenwänden und seiner Bodenwand 44 Wände des Reinluftbereichs 28 des Kraftstofftanks 40 ausbildet. Die Bodenwand 44 weist dabei eine Öffnung beziehungsweise einen Durchlass 45 auf, durch den die im Reinluftbereich 28 vorliegende gereinigte Ansaugluft in Richtung zu einer nur schematisch dargestellten Brennkraftmaschine 46 strömen kann und zwar in Richtung zu einer Gemischaufbereitungsvorrichtung in der Form eines Drosselklappenkörpers oder auch eines Vergasers der Brennkraftmaschine 46.

Ähnlich der in Fig. 1 und 2 der Zeichnung dargestellten Ausführungsform ist der Rohluftbereich 27 oberhalb des Filterelements 25 und unterhalb des Unterbaus 31 des Fahrersattels 16 angeordnet und zwar derart, dass Seitenwände des Rohluftbereichs 27 von Wänden zur Bildung des Kraftstofftanks 40 ausgebildet werden und der Unterbau 31 des Fahrersattels 16 die Funktion eines Deckels der Luftansaugvorrichtung 29 bildet.

In dem in Hochachsrichtung des Motorrads 1 nach Fig. 1 und 3 tiefsten Bereich des jeweiligen Kraftstofftanks 18 beziehungsweise 40 ist jeweils eine elektrisch betriebene Kraftstoffpumpe angeordnet, die den Kraftstoff in Richtung zur Gemischaufbereitungsvorrichtung des Motorrads transportiert und gleichzeitig auch einen entsprechenden Kraftstoffdruck für eine Kraftstoffeinspritzvorrichtung zur Verfügung stellt.

Wie es ohne weiteres anhand von Fig. 3 der Zeichnung ersichtlich ist, bildet der Kraftstofftank 40 im Bereich des Hecktanks 42 eine Ausnehmung 47 aus. Diese Ausnehmung 47 dient der Bereitstellung eines Raumes für die Anordnung des Federdämpferelements 13 beziehungsweise eines am oberen Ende des Federdämpferelements 13 angeordneten Ausgleichsbehälters oder einer Umlenkung 48.

Der Kraftstofftank 40 ist im Bereich seines Fronttankbereichs 41 über ein gleichzeitig als Festlager dienendes Schwenklager 49 am Rahmen 5 festgelegt und mittels zweier weiterer Loslagerpunkte am Rahmen festgelegt, so dass der Kraftstofftank 40 am Rahmen 5 auch einen entsprechenden Längenausgleich durchführen kann. Der Kraftstofftank 40 kann am Schwenklager 49 nach oben verschwenkt werden, so dass nach dem Abnehmen der Sitzbank 16 und dem Verschwenken des Kraftstofftanks 40 beispielsweise das Federdämpferelement 13 frei zugänglich ist für Einstell- oder Wartungs- oder Austauscharbeiten.

Der Kraftstofftank 40 ist vollständig selbsttragend ausgeführt, so dass am Rahmen 5 kein Heckrahmen oder Heckrahmenausleger befestigt werden müssen, sondern der Kraftstofftank 40 auch der Aufnahme beispielsweise des Gewichts des Fahrers des Motorrads über den Fahrersattel 16 dient.

Zudem ist der Hecktankbereich 42 dem Hinterrad 3 gegenüberliegend gekrümmt ausgebildet und bildet dadurch einen Kotflügel 50 für das Hinterrad 3 aus.

Der Kraftstofftank 40 kann nun noch so modifiziert werden, dass beispielsweise die Ausnehmung 47 weggelassen wird, was beispielsweise bei einem Motorrad möglich ist, welches mit geringeren Federwegen ausgerüstet werden soll. In einem solchen Fall kann dann der Reinluftbereich 28 durch eine entsprechende Umformung des Verbindungsabschnitts 43 beziehungsweise der Bodenwand 44 entsprechend erweitert werden, so dass der Reinluftbereich 28 deutlich größer wird und auf diese Weise zur Beruhigung des Ansauggeräusches der Brennkraftmaschine beiträgt und dadurch das Fahrgeräusch des Motorrads verringert werden kann. Nach einer alternativen Ausführungsform ist es auch möglich, beispielsweise über ein sich an den Reinluftbereich 28 anschließendes nicht näher dargestelltes Gehäuse eine deutliche Vergrößerung des Reinluftbereiches 28 zu erzielen, um auf diese Weise beispielsweise eine das Ansauggeräusch weiter bedämpfende Kammer zur Verfügung zu stellen.

Der Kraftstofftank integriert auf diese Weise die Funktion der Luftansaugvorrichtung beziehungsweise der Airbox und erleichtert einerseits die Montage der Luftansaugvorrichtung am Motorrad bei der Fertigung des Motorrads, da eigenständige Montageschritte für die Luftansaugvorrichtung wegfallen und verringert auch die Zahl der zur Fertigung des Motorrads benötigten Bauteile.

Hinsichtlich vorstehend im Einzelnen nicht näher erläuterter Merkmale der Erfindung wird im Übrigen ausdrücklich auf die Ansprüche und die Zeichnung verwiesen.

### Bezugszeichenliste

- 1: Motorrad
- 2: Vorderrad
- 3: Hinterrad
- 4: Vorderradgabel
- 5: Rahmen
- 6: Unterzüge
- 7: Oberrohr
- 8: Aufnahmeraum
- 9: Dreiecksbereich
- 10: Hinterradschwinge
- 11: Schalldämpfer
- 12: Kotflügel
- 13: Federdämpferelement
- 14: unterer Anbindungspunkt
- 15: oberer Anbindungspunkt
- 16: Fahrersattel
- 17: Einfüllstutzen
- 18: Kraftstofftank
- 19: Lenkkopflagerrohr
- 20: vorderer/oberer Aufnahmebereich
- 21: unterer/hinterer Aufnahmebereich
- 22: Verbindungsbereich
- 23: Ausnehmung
- 24: Filterelementaufnahmebereich
- 25: Filterelement
- 26: Filterelementträger
- 27: Rohluftbereich
- 28: Reinluftbereich
- 29: Luftansaugvorrichtung
- 30: Kanal
- 31: Boden/Unterbau
- 32: Oberseite des Kraftstofftanks
- 33: Verkleidungsbauteil
- 34: Öffnung
- 35: elastischer Körper
- 36: oberer Dichtrand
- 37: unterer Dichtrand
- 38: Rand
- 39: Öffnung
- 40: Kraftstofftank
- 41: Fronttank
- 42: Hecktank
- 43: Verbindungsabschnitt
- 44: Bodenwand
- 45: Öffnung/Durchlass
- 46: Brennkraftmaschine
- 47: Ausnehmung
- 48: Umlenkung
- 49: Schwenklager
- 50: Kotflügel

## Patentansprüche

1. Motorrad mit einem Fahrersattel (16) und einem Kraftstofftank (18, 40) sowie einer mit einem Filterelement (25) versehenen Luftansaugvorrichtung (29) zur Filterung von Ansaugluft für eine Brennkraftmaschine des Motorrads (1), wobei die Luftansaugvorrichtung (29) eine Filterelementaufnahme (24) aufweist, **dadurch gekennzeichnet, dass** die Filterelementaufnahme (24) von einem durch den Kraftstofftank (18, 40) gebildeten Bereich ausgebildet ist.

2. Motorrad nach Anspruch 1, **dadurch gekennzeichnet, dass** der Filterelementaufnahmebereich (24) mit dem Kraftstofftank (18, 40) einstückig ausgebildet ist.

3. Motorrad nach Anspruch 1 oder 2, **dadurch gekennzeichnet, dass** die Luftansaugvorrichtung (29) integraler Bestandteil des Kraftstofftanks (18, 40) ist und mindestens ein Rohluftbereich (27) und/oder Reinluftbereich (28) der Luftansaugvorrichtung (29) von durch den Kraftstofftank (18, 40) bildenden Wandbereichen eingeschlossen ist.

4. Motorrad nach einem der vorstehenden Ansprüche, **dadurch gekennzeichnet, dass** die Luftansaugvorrichtung (29) unterhalb des Fahrersattels (16) angeordnet ist und zumindest Teilbereiche eines Rohluftbereichs (27) der Luftansaugvorrichtung (29) von dem Fahrersattel (16) eingeschlossen sind.

5. Motorrad nach einem der vorstehenden Ansprüche, **dadurch gekennzeichnet, dass** ein am Fahrersattel (16) angeordneter Boden (31) eine im Kraftstofftank (18, 40) ausgebildete Ausnehmung (23) übergreift, in der das Filterelement (25) angeordnet ist.

6. Motorrad nach einem der vorstehenden Ansprüche, **dadurch gekennzeichnet, dass** der Kraftstofftank (18, 40) eine lang gestreckte Konfiguration aufweist und eine zur Aufnahme des Filterelements (25) ausgebildete Ausnehmung (23) des Kraftstofftanks (18, 40) zumindest seitlich von zur Aufnahme von Kraftstoff ausgebildeten Bereichen des Kraftstofftanks (18, 40) umfasst ist.

7. Motorrad nach einem der vorstehenden Ansprüche, **dadurch gekennzeichnet, dass** der Fahrersattel (16) den Kraftstofftank (18, 40) entlang seiner Längsrichtung zumindest teilweise überspannt und zwischen einem Boden (31) des Fahrersattels (16) und einer Oberseite (32) des Kraftstofftanks (18, 40) ein Kanal (30) zur Führung von Ansaugluft ausgebildet ist.

8. Motorrad nach einem der vorstehenden Ansprüche, **dadurch gekennzeichnet, dass** in eine im Kraftstofftank (18) ausgebildete Ausnehmung (23) ein vorzugsweise elastisch ausgebildeter Körper (35) einbringbar ist, der stromabwärts des Filterelements (25) einen Reinluftbereich (28) ausbildet und zur Führung von Ansaugluft in Richtung zur Brennkraftmaschine ausgebildet ist.

9. Motorrad nach einem der vorstehenden Ansprüche, **dadurch gekennzeichnet, dass** sich der Kraftstofftank (18) in Längsrichtung des Motorrads (1) von einem Bereich nahe eines Lenkkopflagerrohrs (19) bis zu einem Bereich oberhalb eines Drehpunktes einer Hinterradschwinge (10) oder bis zu einem Bereich oberhalb eines Hinterrades (3) des Motorrades (1) erstreckt.

10. Motorrad nach einem der vorstehenden Ansprüche, **dadurch gekennzeichnet, dass** ein einem Hinterrad (3) des Motorrads (1) zugewandter unterer Bereich des Kraftstofftanks ( 40) als Kotflügel (50) für das Hinterrad (3) gekrümmt ausgebildet ist.

11. Motorrad nach einem der vorstehenden Ansprüche, **dadurch gekennzeichnet, dass** der Kraftstofftank (18, 40) selbsttragend ausgebildet ist und mittels eines Festlagers und mindestens eines Loslagers an einem Rahmen (5) des Motorrads (1) festlegbar ist.

12. Motorrad nach einem der vorstehenden Ansprüche, **dadurch gekennzeichnet, dass** der Kraftstofftank (18, 40) im Bereich eines Lenkkopflagerrohres (19) mittels eines Schwenklagers (49) an einem Rahmen (5) des Motorrads (1) festgelegt ist und der Kraftstofftank (18, 40) am Schwenklager (49) in Richtung einer Hochachse des Motorrads (1) verschwenkbar ist.

13. Motorrad nach einem der vorstehenden Ansprüche, **dadurch gekennzeichnet, dass** der Kraftstofftank (18, 40) in seinem eine Ausnehmung (23) für die Anordnung des Filterelements (25) umgebenden Bereich mit mindestens einer Verengung versehen ist derart, dass die Strömungsgeschwindigkeit des Kraftstoffs zwischen dem in Längsrichtung des Motorrads (1) vorderen und hinteren Bereich des Kraftstofftanks (18, 40) im Bereich der Verengung verringert ist.

14. Motorrad nach einem der vorstehenden Ansprüche, **dadurch gekennzeichnet, dass** der Kraftstofftank (18, 40) aus einem Kunststoffwerkstoff, insbesondere Polyethylen und/oder Polyamid gebildet ist und der Kraftstofftank (18, 40) zweischalig ausbildbar ist mit einer innen liegenden Schale aus Polyamid und einer außen liegenden Schale aus Polyethylen.

15. Kraftstofftank (18, 40) für ein Motorrad (1) mit einer integrierten Luftansaugvorrichtung (29) und einer Filterelementaufnahme (24) für ein Filterelement (25) zur Filterung von Ansaugluft für eine Brennkraftmaschine des Motorrads (1), **dadurch gekennzeichnet dass** die Filterelementaufnahme (24) an einem durch den Kraftstofftank (18, 40) gebildeten Bereich einstückig mit dem Kraftstofftank (18, 40) ausgebildet ist und das Filterelement (25) an der Filterelementaufnahme (24) festlegbar ist derart, dass das Filterelement (25) einen Rohluftbereich (27) und einen Reinluftbereich (28) trennt und der Reinluftbereich (28) von mit dem Kraftstofftank (18, 40) einstückig ausgebildeten Seitenwänden gebildet ist und einen Auslass zur Führung von Ansaugluft in Richtung zur Brennkraftmaschine aufweist.

## Claims

1. Motorcycle having a rider saddle (16), a fuel tank (18, 40), and an air intake apparatus (29), provided with a filter member (25), for filtering intake air for an internal combustion engine of the motorcycle (1), the air intake apparatus (29) comprising a filter member mount (24), **characterised in that** the filter member mount (24) is formed by a region formed by the fuel tank (18, 40).

2. Motorcycle according to claim 1, **characterised in that** the filter member mount region (24) is formed integrally with the fuel tank (18, 40).

3. Motorcycle according to either claim 1 or claim 2, **characterised in that** the air intake apparatus (29) is an integral component of the fuel tank (18, 40) and at least an unclean air portion (27) and/or clean air portion (28) of the air intake apparatus (29) is enclosed by wall regions formed by the fuel tank (18, 40).

4. Motorcycle according to any one of the preceding claims, **characterised in that** the air intake apparatus (29) is arranged beneath the rider saddle (16) and at least partial regions of an unclean air region (27) of the air intake apparatus (29) are enclosed by the rider saddle (16).

5. Motorcycle according to any one of the preceding claims, **characterised in that** a base (31) arranged on the rider saddle (16) encompasses a cavity (23) which is formed in the fuel tank (18, 40) and in which the filter member (25) is disposed.

6. Motorcycle according to any one of the preceding claims, **characterised in that** the fuel tank (18, 40) has an elongate configuration, and a cavity (23), formed to receive the filter member (25), in the fuel tank (18, 40) is encompassed at least laterally by regions, formed to receive fuel, of the fuel tank (18, 40).

7. Motorcycle according to any one of the preceding claims, **characterised in that** the rider saddle (16) covers the fuel tank (18, 40) in the longitudinal direction thereof, at least in part, and a duct (30) for conveying intake air is formed between a base (31) of the rider saddle (16) and an upper face (32) of the fuel tank (18, 40).

8. Motorcycle according to any one of the preceding claims, **characterised in that** a preferably resiliently formed body (35) can be introduced into a cavity (23) formed in the fuel tank (18), forms a clean air portion (28) downstream from the filter member (25), and is formed so as to convey intake air towards the internal combustion engine.

9. Motorcycle according to any one of the preceding claims, **characterised in that** the fuel tank (18) extends in the longitudinal direction of the motorcycle (1) from a region close to a steering head bearing tube (19) to a region above a fulcrum of a rear wheel pivot (10) or to a region above a rear wheel (3) of the motorcycle (1).

10. Motorcycle according to any one of the preceding claims, **characterised in that** a lower region, facing a rear wheel (3) of the motorcycle (1), of the fuel tank (40) is formed curved as a mudguard (50) for the rear wheel (3).

11. Motorcycle according to any one of the preceding claims, **characterised in that** the fuel tank (18, 40) is formed so as to be self-supporting and is attachable to a frame (5) of the motorcycle (1) by a fixed bearing and at least one floating bearing.

12. Motorcycle according to any one of the preceding claims, **characterised in that** the fuel tank (18, 40) is fixed to a frame (5) of the motorcycle (1) in the region of a steering head bearing tube (19) by a pivot bearing (49) and the fuel tank (18, 40) is pivotable on the pivot bearing (49) along a vertical axis of the motorcycle (1).

13. Motorcycle according to any one of the preceding claims, **characterised in that** the fuel tank (18, 40) is provided, in the region thereof surrounding a cavity (23) for the positioning of the filter member (25), with at least one constriction, in such a way that the flow speed of the fuel between the front and rear region of the fuel tank (18, 40) in the longitudinal direction of the motorcycle (1) is reduced in the region of the constriction.

14. Motorcycle according to any one of the preceding claims, **characterised in that** the fuel tank (18, 40) is formed from a plastics material, in particular polyethylene and/or polyamide, and the fuel tank (18, 40) can be formed in two shells with an inner polyamide shell and an outer polyethylene shell.

15. Fuel tank (18, 40) for a motorcycle (1) having an integrated air intake apparatus (29) and a filter member mount (24) for a filter member (25) for filtering intake air for an internal combustion engine of the motorcycle (1), **characterised in that** the filter member mount (24) is formed integrally with the fuel tank (18, 40) on a region formed by the fuel tank (18, 40), and the filter member (25) can be fixed to the filter member mount (24) in such a way that the filter member (25) separates an unclean air portion (27) and a clean air portion (28) and the clean air portion (28) is formed by side walls, which are formed integrally with the fuel tank (18, 40), and comprises an outlet for conveying intake air towards the internal combustion engine.

## Revendications

1. Moto comprenant une selle de conducteur (16) et un réservoir de carburant (18, 40) ainsi qu'un dispositif d'aspiration d'air (29) doté d'un élément filtrant (25) pour le filtrage d'air d'aspiration pour un moteur à combustion interne de la moto (1), le dispositif d'aspiration d'air (29) présentant un logement d'élément filtrant (24), **caractérisée en ce que** le logement d'élément filtrant (24) est réalisé par une zone formée par le réservoir de carburant (18, 40).

2. Moto selon la revendication 1, **caractérisée en ce que** la zone de logement d'élément filtrant (24) est réalisée d'une seule pièce avec le réservoir de carburant (18, 40).

3. Moto selon la revendication 1 ou 2, **caractérisée en ce que** le dispositif d'aspiration d'air (29) fait partie intégrante du réservoir de carburant (18, 40) et au moins une zone d'air brut (27) et/ou une zone d'air pur (28) du dispositif d'aspiration d'air (29) est enfermée par des zones de paroi formant le réservoir de carburant (18, 40).

4. Moto selon l'une quelconque des revendications précédentes, **caractérisée en ce que** le dispositif d'aspiration d'air (29) est disposé au-dessous de la selle du conducteur (16) et au moins des zones partielles d'une zone d'air brut (27) du dispositif d'aspiration d'air (29) sont enfermées par la selle de conducteur (16).

5. Moto selon l'une quelconque des revendications précédentes, **caractérisée en ce qu'**un fond (31) disposé sur la selle de conducteur (16) chevauche un évidement (23) réalisé dans le réservoir de carburant (18, 40) dans lequel est disposé l'élément filtrant (25).

6. Moto selon l'une quelconque des revendications précédentes, **caractérisée en ce que** le réservoir de carburant (18, 40) présente une configuration étirée en longueur et un évidement (23), réalisé pour le logement de l'élément filtrant (25), du réservoir de carburant (18, 40) est englobé au moins sur le côté par des zones, réalisées pour le logement de carburant, du réservoir de carburant (18,40).

7. Moto selon l'une quelconque des revendications précédentes, **caractérisée en ce que** la selle de conducteur (16) recouvre au moins partiellement le réservoir de carburant (18, 40) le long de sa direction longitudinale et un canal (30) pour le guidage de l'air d'aspiration est réalisé entre un fond (31) de la selle de conducteur (16) et un côté supérieur (32) du réservoir de carburant (18, 40).

8. Moto selon l'une quelconque des revendications précédentes, **caractérisée en ce qu'**un corps (35) conçu de préférence de façon élastique peut être introduit dans un évidement (23) réalisé dans le réservoir de carburant (18), lequel corps forme une zone d'air pur (28) en aval de l'élément filtrant (25) et est conçu pour le guidage d'air d'aspiration en direction du moteur à combustion interne.

9. Moto selon l'une quelconque des revendications précédentes, **caractérisée en ce que** le réservoir de carburant (18) s'étend dans la direction longitudinale de la moto (1) depuis une zone située à proximité d'une tube de palier de tête de direction (19) jusqu'à une zone située au-dessus d'un point de rotation d'une fourche oscillante de roue arrière (10) ou jusqu'à une zone située au-dessus d'une roue arrière (3) de la moto (1).

10. Moto selon l'une quelconque des revendications précédentes, **caractérisée en ce qu'**une zone inférieure, tournée vers une roue arrière (3) de la moto (1), du réservoir de carburant (40) est conçue incurvée comme aile (50) pour la roue arrière (3).

11. Moto selon l'une quelconque des revendications précédentes, **caractérisée en ce que** le réservoir de carburant (18, 40) est conçu autoporteur et peut être vissé au moyen d'un palier fixe et d'au moins un palier libre sur un cadre (5) de la moto (1).

12. Moto selon l'une quelconque des revendications précédentes, **caractérisée en ce que** le réservoir de carburant (18, 40) est fixé dans la zone d'un tube de palier de tête de direction (19) au moyen d'un palier pivotant (49) sur un cadre (5) de la moto (1) et le réservoir de carburant (18, 40) peut basculer sur le palier pivotant (49) en direction d'un axe vertical de la moto (1).

13. Moto selon l'une quelconque des revendications précédentes, **caractérisée en ce que** le réservoir de carburant (18, 40) est doté dans sa zone entourant un évidement (23) pour l'agencement de l'élément filtrant (25) d'au moins un rétrécissement de telle sorte que la vitesse d'écoulement du carburant entre la zone avant et la zone arrière, dans la direction longitudinale de la moto (1), du réservoir de carburant (18, 40) est réduite dans la zone du rétrécissement.

14. Moto selon l'une quelconque des revendications précédentes, **caractérisée en ce que** le réservoir de carburant (18, 40) est formé à base d'un matériau plastique, en particulier du polyéthylène et/ou du polyamide, et le réservoir de carburant (18, 40) peut être formé avec deux coques avec une coque intérieure à base de polyamide et une coque extérieure à base de polyéthylène.

15. Réservoir de carburant (18, 40) pour une moto (1) comprenant un dispositif d'aspiration d'air (29) intégré et un logement d'élément filtrant (24) pour un élément filtrant (25) pour le filtrage d'air d'aspiration pour un moteur à combustion interne de la moto (1), **caractérisé en ce que** le logement d'élément filtrant (24) est réalisé sur une zone formée par le réservoir de carburant (18, 40) d'une seule pièce avec le réservoir de carburant (18, 40) et l'élément filtrant (25) peut être fixé sur le logement d'élément filtrant (24) de telle sorte que l'élément filtrant (25) sépare une zone d'air brut (27) et une zone d'air pur (28) et la zone d'air pur (28) est formée par des parois latérales réalisées d'une seule pièce avec le réservoir de carburant (18, 40) et présente une sortie pour le guidage d'air d'aspiration en direction du moteur à combustion interne.
